# EUROPEAN PATENT APPLICATION

(11) **EP 4 742 806 A1**
(43) Date of publication of application: **13.05.2026**
(21) Application number: 24856777.8
(22) Date of filing: 19.08.2024
(51) Int. Cl.: H04W 72/566, H04W 12/06, H04W 76/15, H04W 84/12, H04W 74/08, H04W 72/56, H04W 74/0816, H04W 74/00

(54) **COMMUNICATION METHOD AND DEVICE USING PREEMPTION IN WIRELESS LAN SYSTEM**

(30) Priority: 18.08.2023 KR 20230108446; 30.08.2023 KR 20230114792; 30.10.2023 KR 20230146709
(71) Applicant: Hyundai Motor Company, Seoul 06797 (KR); Kia Corporation, Seoul 06797 (KR); Korea National University of Transportation Industry-Academic Cooperation Foundation, Chungju-si, Chungcheongbuk-do 27469 (KR)
(72) Inventor: KIM, Yong Ho, Incheon 22003 (KR); AHN, Woo Jin, Anyang-si, Gyeonggi-do 14038 (KR); MOON, Ju Seong, Osan-si, Gyeonggi-do 18101 (KR); LEE, Gwang Ho, Hwaseong-si, Gyeonggi-do 18416 (KR)
(74) Representative: Isarpatent
(86) International application number: PCT/KR2024/012287
(87) International publication number: WO 2025/042166

(57) **Abstract**

In order to perform communication using preemption in a wireless LAN system, a method of operating a STA (station) comprises acquiring at least some of parameters of a first frame based on the first frame, acquiring a preemption indicator from a second frame including the preemption indicator, transmitting a third frame indicating a preemption operation based on the preemption indicator, receiving a fourth frame indicating resources allocated for the preemption operation, and transmitting preemption data based on the resources. The parameters of the first frame and parameters of the third frame have the same value.

## Description

### Technical Field

The present invention relates to a wireless local area network (WLAN) system, and more particularly, to a communication method and device using preemption in a wireless LAN system.

### Background Art

Recently, as the spread of mobile devices expands, a wireless local area network technology capable of providing fast wireless communication services to mobile devices is in the spotlight. The wireless local area network (LAN) technology may be a technology that supports mobile devices such as smart phones, smart pads, laptop computers, portable multimedia players, embedded devices, and the like to wirelessly access the Internet based on wireless communication technology.

As applications requiring higher throughput and applications requiring real-time transmission occur, an expanded frequency bandwidth and/or an efficient retransmitting operation may be supported in a WLAN. In addition, an operation of simultaneously using multiple links or links may be supported.

Meanwhile, the technologies that are described in the Background section are written to improve the understanding of the background of the present disclosure and may include content that is not already known to those of ordinary skill in the art to which the present disclosure belongs.

### Description of Invention

### Technical Problem

The present disclosure provides a method and device for performing communication using preemption in a wireless local area network (WLAN) system.

The present disclosure provides a method and device for exchanging data during preemption operation within a transmit opportunity (TXOP) in a WLAN system.

The present disclosure provides a method and device for performing preemption between interframe spaces transmitted by other terminals in a WLAN system.

The present disclosure provides a method and device for controlling preemption operations in a wireless LAN system.

The present disclosure provides a method and device for controlling interframe spaces during preemption operations in a wireless LAN system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

According to an embodiment of the present disclosure, a method of operating a STA (station) in a wireless LAN system may comprise acquiring at least some of parameters of a first frame based on the first frame, acquiring a preemption indicator from a second frame including the preemption indicator, transmitting a third frame indicating a preemption operation based on the preemption indicator, receiving a fourth frame indicating resources allocated for the preemption operation, and transmitting preemption data based on the resources. The parameters of the first frame and parameters of the third frame have the same value.

According to an embodiment of the present disclosure, a method of operating an access point (AP) in a wireless LAN system may comprise transmitting a first frame, transmitting a second frame including a preemption indicator, receiving a third frame indicating a preemption operation based on the preemption indicator, transmitting a fourth frame indicating resources allocated for the preemption operation, and receiving preemption data based on the resources. The first frame and the third frame include parameters having the same value.

According to an embodiment of the present disclosure, a station (STA) in a wireless LAN system may comprise a transceiver and a processor connected to the transceiver. The processor may acquire at least some of parameters of a first frame based on the first frame, acquire a preemption indicator from a second frame including the preemption indicator, transmit a third frame indicating a preemption operation based on the preemption indicator, receive a fourth frame indicating resources allocated for the preemption operation, and transmit preemption data based on the resources. The parameters of the first frame and parameters of the third frame have the same value.

According to an embodiment of the present disclosure, an access point (AP) in a wireless LAN system may comprise a transceiver and a processor connected to the transceiver. The processor may transmit a first frame, transmit a second frame including a preemption indicator, receive a third frame indicating a preemption operation based on the preemption indicator, transmit a fourth frame indicating resources allocated for the preemption operation and receive preemption data based on the resources. The first frame and the third frame include parameters having the same value.

### Advantageous Effects

According to the present disclosure, a preemption operation can be performed.

According to the present disclosure, an interframe space for the preemption operation can be controlled.

According to the present disclosure, a preemption request frame can be transmitted based on a Multi User-Request To Send (MU-RTS) trigger frame for setting a transmit opportunity (TXOP).

According to the present disclosure, multiple wireless LAN terminals can simultaneously transmit preemption request frames.

According to the present disclosure, multiple wireless LAN terminals can be allocated resources for the preemption operation.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

### Description of the Drawings

FIG. 1 is a block diagram illustrating a first embodiment of a communication node constituting a WLAN system.
FIG. 2 is a flowchart illustrating an embodiment of a negotiation procedure for multi-link operation in a wireless LAN system.
FIG. 3 illustrates a first embodiment of a communication method using preemption in a wireless LAN system.
FIG. 4 illustrates a second embodiment of a communication method using preemption in a wireless LAN system.
FIG. 5a illustrates a third embodiment of a communication method using preemption in a wireless LAN system.
FIG. 5b illustrates a third embodiment of a communication method using preemption in a wireless LAN system.
FIG. 6a illustrates a fourth embodiment of a communication method using preemption in a wireless LAN system.
FIG. 6b illustrates a fourth embodiment of a communication method using preemption in a wireless LAN system.
FIG. 6c illustrates a fifth embodiment of a communication method using preemption in a wireless LAN system.
FIG. 6d illustrates a fifth embodiment of a communication method using preemption in a wireless LAN system.
FIG. 7a illustrates a sixth embodiment of a communication method using preemption in a wireless LAN system.
FIG. 7b illustrates a sixth embodiment of a communication method using preemption in a wireless LAN system.
FIG. 8 illustrates a seventh embodiment of a communication method using preemption in a wireless LAN system.
FIG. 9a illustrates a first embodiment of a tone mapping structure and allocation method for an NFRP (NDP feedback report poll) in a wireless LAN system.
FIG. 9b illustrates a second embodiment of a tone mapping structure and allocation method for an NFRP in a wireless LAN system.
FIG. 9c illustrates a third embodiment of a tone mapping structure and allocation method for an NFRP in a wireless LAN system.
FIG. 9d illustrates a fourth embodiment of a tone mapping structure and allocation method for an NFRP in a wireless LAN system.
FIG. 10 illustrates a flowchart of a procedure for an access point (AP) to perform a preemption operation according to one embodiment of the present disclosure.
FIG. 11 illustrates a flowchart of a procedure for a station (STA) to perform a preemption operation according to one embodiment of the present disclosure.

### Modes for Invention

The present disclosure may have various modifications and embodiments, and specific embodiments are illustrated in the drawings and described in detail in the detailed description. However, this is not intended to limit the present disclosure to specific embodiments, but should be understood to include all modifications, equivalents, or substitutes included in the spirit and technical scope of the present disclosure.

The terms first, second, etc. may be used to describe various components, but the components should not be limited by the terms. The terms are only used for the purpose of distinguishing one component from another. For example, without departing from the scope of the present disclosure, the first component may be referred to as the second component, and similarly, the second component may also be referred to as the first component. The term and/or includes a combination of a plurality of related described items or any item among a plurality of related described items.

When it is said that a component is 'coupled with/to' or 'connected to' another component, it should be understood that the one component is connected to the other component directly or through any other component in between. On the other hand, when it is said that a component is 'directly connected to' or 'directly coupled to' another component, it should be understood that there is no other component between the components.

The terminology used in the present disclosure is only used to describe specific embodiments and is not intended to limit the present disclosure. The singular expression includes the plural expression unless the context clearly indicates otherwise. In the present disclosure, terms such as "include" or "have" are intended to specify the presence of a feature, number, step, operation, component, part or combination thereof described in the specification, but should be understood not to exclude in advance the possibility of the presence or addition of one or more other features, numbers, steps, operations, components, parts or combinations thereof.

Unless otherwise defined, all terms used herein, including technical or scientific terms, have the same meaning as commonly understood by one of ordinary skill in the art to which this invention pertains. Terms defined in commonly used dictionaries should be interpreted as having a meaning consistent with their meaning in the context of the relevant technology, and will not be interpreted in an idealized or overly formal sense unless explicitly defined herein.

Hereinafter, with reference to the attached drawings, preferred embodiments of the present invention will be described in more detail. In order to facilitate an overall understanding in describing the present invention, identical reference numerals are used for identical components in the drawings, and redundant descriptions of identical components are omitted.

Below, a wireless communication system to which embodiments of the present invention are applied will be described. The wireless communication system to which embodiments of the present invention are applied is not limited to the description below, and embodiments of the present invention can be applied to various wireless communication systems. The wireless communication system may be referred to as a "wireless communication network."

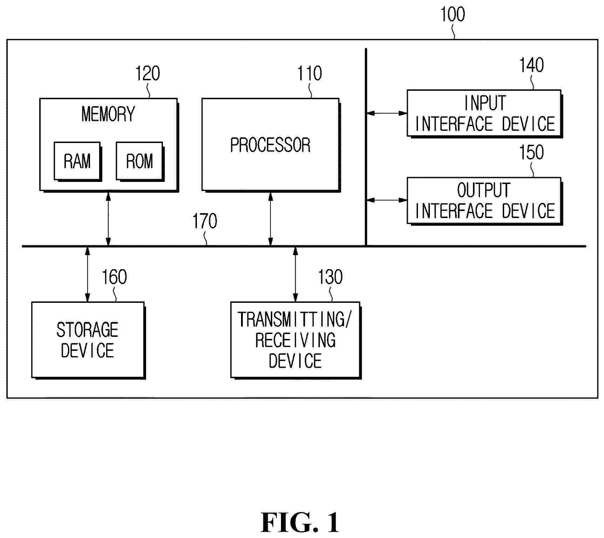

FIG. 1 illustrates a block diagram of a communication node in a WLAN system.

Referring to FIG. 1, a communication node 100 may be an access point (AP), a station (STA), an AP multi-link device (MLD), or a non-AP MLD. A STA may be a non-AP STA. An operating channel width supported by an AP may be 20 MHz, 80 MHz, or 160 MHz. An operating channel width supported by a STA may be 20 MHz or 80 MHz.

The communication node 100 may include at least one processor 110, a memory 120, and at least one transmitting/receiving device 130 that is connected to a network and performs communication. The transmitting/receiving device 130 may also be referred to as a transceiver, a radio frequency (RF) unit, or a RF module. In addition, the communication node 100 may further include an input interface device 140, an output interface device 150, and a storage device 160. Components included in the communication node 100 may be connected by a bus 170 and perform communication between them.

However, each component included in the communication node 100 may be connected not by the common bus 170 but by an individual interface or individual bus around the processor 110. For example, the processor 110 may be connected to at least one of the memory 120, the transmitting/receiving device 130, the input interface device 140, the output interface device 150, and the storage device 160 through a dedicated interface.

The processor 110 may execute a program command stored in at least one of the memory 120 and the storage device 160. The processor 110 may be a central processing unit (CPU), a graphics processing unit (GPU), or a dedicated processor that performs methods according to the embodiments of the present invention. The memory 120 and the storage device 160 may each be formed as at least one of a volatile storage medium and a non-volatile storage medium. For example, the memory 120 may be formed as at least one of a read only memory (ROM) and a random access memory (RAM).

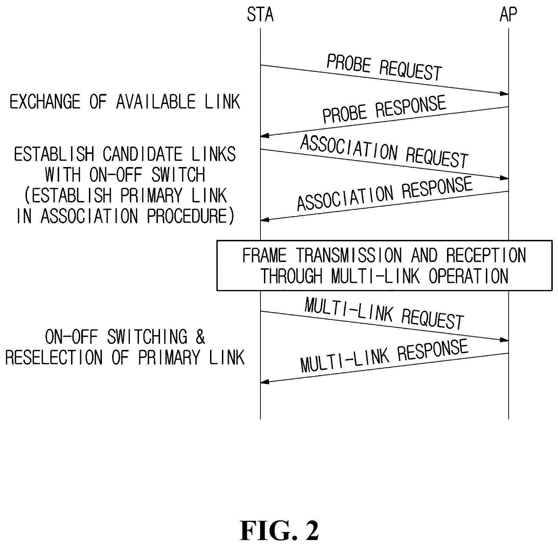

FIG. 2 is a flowchart illustrating an embodiment of a negotiation procedure for multi-link operation in a wireless LAN system.

Referring to FIG. 2, a connection procedure between a station (STA) and an access point (AP) in an infrastructure basic service set (BSS) may include a probe step of the access point, an authentication step between the station and the detected access point, and an association step between the station and the authenticated access point.

In the probe step, the station may detect one or more access points using either a passive scanning method or an active scanning method. When the passive scanning method is used, the station may detect one or more access points by overhearing beacon frames transmitted by one or more access points. When the active scanning method is used, the station may detect one or more access points by transmitting a probe request frame and receiving a probe response frame, which is a response to the probe request frame, from one or more access points.

If one or more access points are detected, the station may perform an authentication step with the detected access point(s). In this case, the station may perform the authentication step with multiple access points. Authentication algorithms according to the IEEE 802.11 standard may be classified into an open system algorithm that exchanges two authentication frames and a shared key algorithm that exchanges four authentication frames.

The station may transmit an authentication request frame based on an authentication algorithm according to the IEEE 802.11 standard, and complete authentication with the access point by receiving an authentication response frame, which is a response to the authentication request frame, from the access point.

When authentication with the access point is completed, the station may perform an association step with the access points. In this case, the station may select one of the access points with which it has performed the authentication step, and perform an association step with the selected access point. That is, the station may transmit an association request frame to the selected access point, and complete the association with the selected access point by receiving an association response frame, which is a response to the association request frame, from the selected access point.

Meanwhile, multi-link operation may be supported in a wireless LAN system. An MLD may include one or more STAs associated with the MLD. The MLD may be a logical entity. The MLD may be classified into an AP MLD and a non-AP MLD. Each STA associated with an AP MLD may be an AP, and each STA associated with a non-AP MLD may be a non-AP STA. To configure multiple links, a multi-link discovery procedure, a multi-link setup procedure, etc. may be performed. The multi-link discovery procedure may be performed during the probe step between the station and the access point. In this case, a multi-link information element (ML IE) may be included in a beacon frame, a probe request frame, and/or a probe response frame.

For example, in order to perform multi-link operation, information indicating whether multi-link operation is available and information about available links may be exchanged between the access point (e.g., the AP associated with an MLD) and the station (e.g., the non-AP STA associated with the MLD) in the probe step. In a negotiation procedure for multi-link operation (e.g., a multi-link setup procedure), the access point and/or the station may transmit information about links to be used for multi-link operation. The negotiation procedure for multi-link operation may be performed during an association procedure (e.g., an association step) between the station and the access point, and information element(s) required for multi-link operation may be set or changed by an action frame during the negotiation procedure.

Additionally, during the connection procedure between the station and the access point (e.g., the association step), available link(s) of the access point may be configured, and each link may be assigned an identifier (ID). Thereafter, during the negotiation and/or change procedures for multi-link operation, information indicating whether each link is active may be transmitted, and this information may be expressed using a link ID.

Information indicating whether multi-link operation is available may be transmitted and received in a capability information element (e.g., an extremely high throughput (EHT) capability information element) exchange procedure between the station and the access point. The capability information element may include information on a supporting band, information on a supporting link (e.g., an ID and/or number of supporting links), information on links capable of STR operation (e.g., band information of links, spacing information of links), etc. In addition, the capability information element may include information individually indicating links capable of STR operation.

Hereinafter, embodiments of a communication method using preemption according to an embodiment of the present disclosure will be described with reference to drawings. The communication method using preemption includes a method of allocating resources using preemption and transmitting data using the allocated resources. The communication method using preemption may be referred to as a preemption operation, a preemption procedure, a preemption process, a preemption method, or priority transmission. The lengths of frames and time intervals illustrated in the drawings are exemplary, and the present disclosure includes embodiments that include frames and time intervals having lengths different from the lengths illustrated in the drawings.

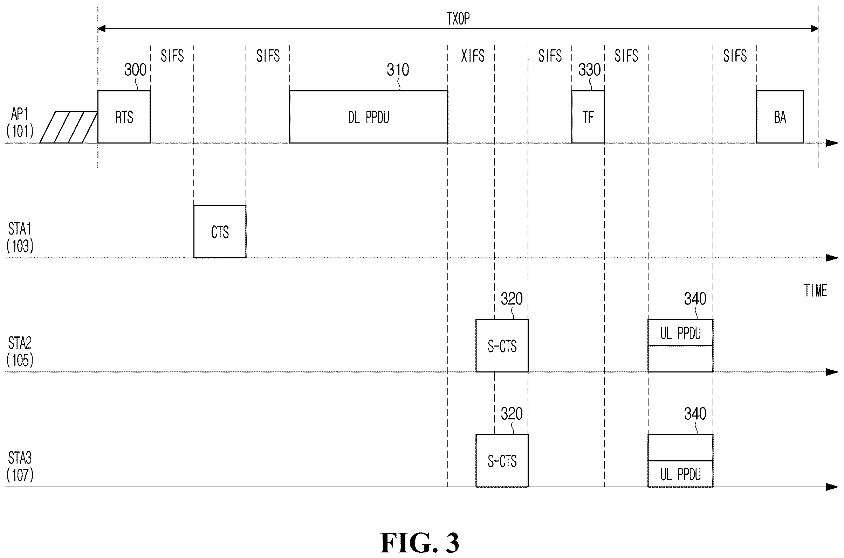

FIG. 3 illustrates a first embodiment of a communication method using preemption in a wireless LAN system.

Referring to FIG. 3, AP 1 101 and STA 1 103, STA 2 105, and STA 3 107 connected to AP 1 101 may operate. AP 1 101 may perform an EDCA backoff operation to acquire a TXOP. Within the TXOP acquired by AP 1 101, AP 1 101 may transmit at least one frame (e.g., PPDU (Physical Layer Protocol Data Unit), MPDU (Medium Access Control Layer Protocol Data Unit), A-MPDU (Aggregated MPDU)). The PPDU transmitted by AP 1 101 may include one or more A-MPDUs or MPDUs.

AP 1 101 may transmit an initial frame 300 of the TXOP. The initial frame 300 may be an MU-RTS frame. If the initial frame 300 is an MU-RTS frame, the AID of a User Info field of the MU-RTS frame may indicate STA 1 103. STA 1 103 may transmit a CTS frame after a certain period of time (e.g., PIFS, SIFS time, or XIFS time for preemption operation) from the transmission end time of the MU-RTS frame 300 transmitted by AP 1 101 with reference to the parameters of the initially transmitted MU-RTS frame 300 (e.g., a channel through which the CTS frame is transmitted, a resource unit).

AP 1 101 may transmit a DL PPDU 310 to STA 1 103 after a certain period of time (e.g., PIFS, SIFS time, or XIFS time for preemption operation) after receiving the CTS frame.

A preemption indicator (e.g., a bit included in a PHY preamble, a bit included in a MAC header, a subfield, an information element, or an indication bit, etc.) is included in a DL PPDU 310 transmitted from AP 1 101 to STA 1 103. The preemption indicator may be included in various forms in the frame 310 transmitted from AP 1 101 to STA 1 103. The preemption indicator may indicate whether preemption is possible for a certain period of time (e.g., PIFS, SIFS time, or XIFS time for preemption operation) from the transmission end time of DL PPDU 310. When the preemption indicator indicates that preemption is possible, at the time when the transmission of the PPDU 310 including the preemption indicator ends, one or more STAs (e.g., STA 2 105 and STA 3 107) that want to perform a preemption operation sense the channel for the XIFS time or a time shorter than the XIFS time for the preemption operation. One or more STAs may transmit a PR (Preemption Request) frame (e.g., S-CTS (simultaneous CTS)) 320 to AP 1 101 during the XIFS time to notify that there is an LL packet to be transmitted. The S-CTS frame 320 may be a CTS frame transmitted by one or more STAs.

STA 2 105 and STA 3 107 may simultaneously transmit PR frames 320 after a time shorter than the XIFS time (e.g., SIFS time) for preemption operation from the transmission end time of the DL PPDU 310 transmitted by AP 1 101 with reference to the parameters (e.g., the channel through which the CTS frame is transmitted) of the initially transmitted MU-RTS frame 300 in order to transmit LL packets generated during the transmission period of the DL PPDU 310 of AP 1 101 to AP 1 101. The SCRAMBLER_INITIAL_VALUE of the TXVECTOR parameter present in the PHY preamble of the S-CTS frame 320 is set to be the same as the SCRAMBLER_INITIAL_VALUE of the RXVECTOR parameter present in the MU-RTS frame 300. That is, the S-CTS frame is configured identically in all STAs based on the SCRAMBLER_INITIAL_VALUE value of the RXVECTOR parameter present in the MU-RTS frame 300. Therefore, the S-CTS frames do not collide with each other. If AP 1 101 receives the S-CTS as the PR frame 320, the DL PPDU waiting to be transmitted in AP 1 101 may be stopped from being transmitted until the preemption sequence ends. Alternatively, AP 1 101 may transmit the DL PPDU even if it receives the PR frame 300, and may attempt to perform the preemption sequence after transmitting the DL PPDU.

The preemption sequence may be performed as follows. AP 1 101 may transmit a trigger frame 330 after a certain period of time (e.g., XIFS time, PIFS time, SIFS time for preemption) after receiving the PR frame 320. The trigger frame 330 may be a frame for uplink OFDMA random access (UORA) resource allocation. For example, the trigger frame 330 may be a frame for allocating uplink resources to STA 2 105 and STA 3 107 that transmitted the PR frames 320. With reference to information included in the common info field and user info field of the trigger frame 330 (e.g., RA-RU (random access resource unit) information included in the user info field, etc.), STA 2 105 and STA 3 107 may be allocated uplink resources. STA 2 105 and STA 3 107 may transmit an uplink frame 340 to each OFDMA subchannel (e.g., Resource Unit) after a certain period of time (e.g., SIFS time) after receiving the trigger frame 330. AP 1 101 may receive an uplink frame 340 from STA 2 105 and STA 3 107 and transmit a response frame (e.g., BA frame) to STA 2 105 and STA 3 107.

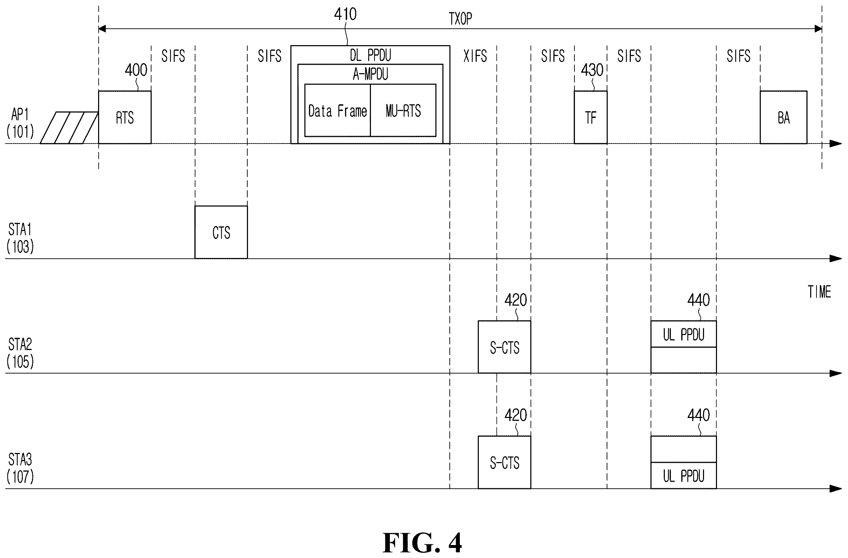

FIG. 4 illustrates a second embodiment of a communication method using preemption in a wireless LAN system.

Referring to FIG. 4, AP 1 101 and STA 1 103, STA 2 105, and STA 3 107 connected to AP 1 101 may operate. AP 1 101 may perform an EDCA backoff operation to acquire a TXOP. Within the TXOP acquired by AP 1 101, AP 1 101 may transmit one or more frames (e.g., PPDU (Physical Layer Protocol Data Unit), MPDU (Medium Access Control Layer Protocol Data Unit), A-MPDU (Aggregated MPDU)). The PPDU transmitted by AP 1 101 may include one or more A-MPDUs or MPDUs.

AP 1 101 may transmit a first frame 400 of the TXOP. The first frame 400 of the TXOP may be an RTS frame. STA 1 103 may transmit a CTS frame after a certain period of time (e.g., PIFS, SIFS time, or XIFS time for preemption operation) from the transmission end time of the RTS frame 400 transmitted by AP 1 101.

After receiving the CTS frame, AP 1 101 may transmit a DL PPDU 410 to STA 1 103 after a certain period of time (e.g., PIFS, SIFS time, or XIFS time for preemption operation). The DL PPDU 410 transmitted from AP 1 101 to STA 1 103 includes a preemption indicator (e.g., a bit included in a PHY preamble, a bit included in a MAC header, a subfield, an information element, or an indication bit, etc.). The preemption indicator may be included in various forms in the frame 410 transmitted from AP 1 101 to STA 1 103. The DL PPDU 410 may include one A-MPDU, and the A-MPDU may include an MU-RTS frame that is transmitted together in the form of an A-MPDU. The AID of the User Info field of the MU-RTS frame transmitted together in the form of the A-MPDU in the DL PPDU 410 may indicate broadcast (e.g., 0 or 2045). Alternatively, the AID of the User Info field of the MU-RTS frame may indicate STA 2 105 or/and STA 3 107. The DL PPDU 410 and MU-RTS frame of AP 1 101 may be transmitted separately. For example, the MU-RTS frame may be transmitted separately after a certain period of time (e.g., SIFS) after transmitting the DL PPDU 410 of AP 1 101.

The preemption indicator may indicate whether preemption is possible for a certain period of time (e.g., PIFS, SIFS time, or XIFS time for preemption operation) from the transmission end time of DL PPDU 410. If the preemption indicator indicates that preemption is possible, STA 2 105 and STA 3 107 may simultaneously transmit a PR frame (e.g., S-CTS frame) 420 after a time shorter than the XIFS time for preemption operation (e.g., SIFS time) from the transmission end time of DL PPDU 410 transmitted by AP 1 101 by referring to the parameters of the MU-RTS frame (e.g., the channel through which the CTS frame is transmitted) transmitted together in the form of A-MPDU to transmit LL packets generated during the transmission period of the DL PPDU 410 of AP 1 101 to AP 1 101. The SCRAMBLER_INITIAL_VALUE of the TXVECTOR parameter present in the PHY preamble of the S-CTS frame 420 is set to be the same as the SCRAMBLER_INITIAL_VALUE of the RXVECTOR parameter present in the MU-RTS frame transmitted together or separately in the form of the A-MPDU. That is, the S-CTS frame is configured identically in all STAs based on the SCRAMBLER_INITIAL_VALUE value of the RXVECTOR parameter present in the MU-RTS frame 300. Therefore, the S-CTS frames do not collide with each other. When AP 1 101 receives the S-CTS, which is the PR frame 420, the transmission of the DL PPDU waiting to be transmitted in AP 1 101 may be stopped until the preemption sequence ends. Alternatively, AP 1 101 may transmit a DL PPDU even if it receives a PR frame 420, and may want to perform a preemption sequence after transmitting the DL PPDU.

The preemption sequence may be performed as follows. AP 1 101 may transmit a trigger frame 430 after a certain period of time (e.g., XIFS time for preemption, PIFS time, SIFS time) after receiving the PR frame (e.g., S-CTS frame). The trigger frame 430 may be a frame for uplink OFDMA random access (UORA) resource allocation. For example, the trigger frame 430 may be a frame for allocating uplink resources to STA 2 105 and STA 3 107 that transmitted the PR frame 420. With reference to information included in the common info field and user info field of the trigger frame 430 (e.g., RA-RU (random access resource unit) information included in the user info field, etc.), STA 2 105 and STA 3 107 may be allocated uplink resources. STA 2 105 and STA 3 107 may transmit an uplink frame 440 to each OFDMA subchannel (e.g., Resource Unit) after a certain period of time (e.g., SIFS time) after receiving the trigger frame 430. AP 1 101 may receive the uplink frame 440 from STA 2 105 and STA 3 107 and transmit a response frame (e.g., BA frame) to STA 2 105 and STA 3 107.

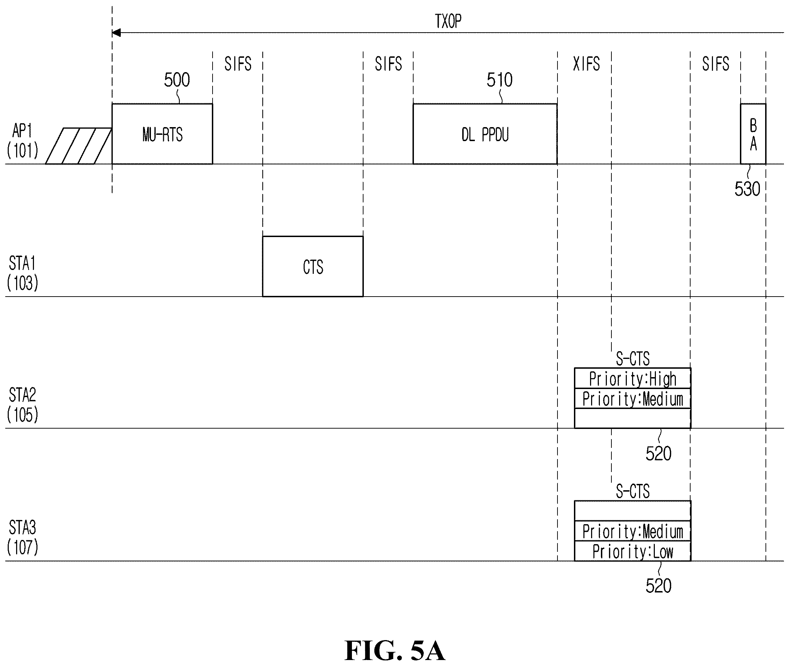

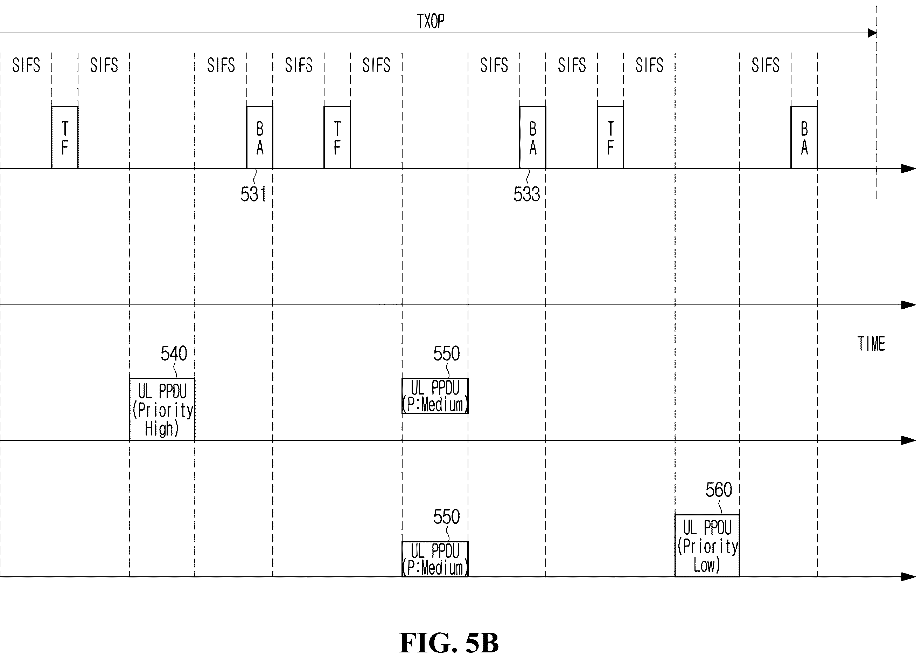

FIGS. 5a and 5b illustrate a third embodiment of a communication method using preemption in a wireless LAN system. FIG. 5a and FIG. 5b divisionally illustrate a third embodiment of a communication method using preemption in a wireless LAN system.

Referring to FIGS. 5a and 5b, AP 1 101 and STA 1 103, STA 2 105, and STA 3 107 connected to AP 1 101 may operate. AP 1 101 may perform an EDCA backoff operation to acquire a TXOP. Within the TXOP acquired by AP 1 101, AP 1 101 may transmit one or more frames (e.g., PPDU (Physical Layer Protocol Data Unit), MPDU (Medium Access Control Layer Protocol Data Unit), A-MPDU (Aggregated MPDU)). The PPDU transmitted by AP 1 101 may include one or more A-MPDUs or MPDUs.

AP 1 101 may transmit a first frame 500 of the TXOP. The first frame 500 may be an MU-RTS frame. If the transmitted first frame is an MU-RTS frame, the AID of the User Info field of the MU-RTS frame 500 may indicate STA 1 103. STA 1 103 may transmit a CTS frame after a certain period of time (e.g., PIFS, SIFS time, or XIFS time for preemption operation) from the transmission end time of the MU-RTS frame 500 transmitted by AP 1 101 with reference to the parameters of the transmitted first MU-RTS frame 500 (e.g., a channel through which the CTS frame is transmitted, a resource unit).

AP 1 101 may transmit a DL PPDU to STA 1 103 after a certain period of time (e.g., PIFS, SIFS time, or XIFS time for preemption operation) after receiving the CTS frame.

A preemption indicator (e.g., a bit included in a PHY preamble, a bit included in a MAC header, a subfield, an information element, or an indication bit, etc.) is included in a DL PPDU 510 transmitted from AP 1 101 to STA 1 103. The preemption indicator may be included in various forms in the frame 510 transmitted from AP 1 101 to STA 1 103. The preemption indicator may indicate whether preemption is possible for a certain period of time (e.g., PIFS, SIFS time, or XIFS time for preemption operation) from the transmission end time of DL PPDU 510. When the preemption indicator indicates that preemption is possible, at the time when the PPDU transmission including the preemption indicator ends, one or more STAs (e.g., STA 2 105 and STA 3 107) that want to perform a preemption operation sense the channel for the XIFS time or a time shorter than the XIFS time for the preemption operation. One or more STAs may transmit a PR (Preemption Request) frame (e.g., S-CTS (simultaneous CTS)) 520 to AP 1 101 during the XIFS time to notify that there is an LL packet to be transmitted. The S-CTS frame 520 may be a CTS frame transmitted by one or more STAs.

STA 2 105 and STA 3 107 may simultaneously transmit the PR frame 520 after a time shorter than the XIFS time (e.g., SIFS time) for preemption operation from the transmission end time of the DL PPDU 510 transmitted by AP 1 101 with reference to the parameters (e.g., the channel through which the CTS frame is transmitted) of the transmitted first MU-RTS frame 500 in order to transmit LL packets generated during the transmission period of the DL PPDU 510 of AP 1 101 to AP 1 101. The SCRAMBLER_INITIAL _VALUE of the TXVECTOR parameter present in the PHY preamble of the S-CTS frame 520 is set to be the same as the SCRAMBLER_INITIAL_VALUE of the RXVECTOR parameter present in the MU-RTS frame 500. That is, the S-CTS frame is configured identically in all STAs based on the SCRAMBLER_INITIAL_VALUE value of the RXVECTOR parameter present in the MU-RTS frame 300. Therefore, the S-CTS frames do not collide with each other.

A subchannel (e.g., OFDMA subchannel, Resource unit) through which the PR frame 520 is transmitted may be classified according to scheduling priority. For example, the channel through which the PR frame 520 is transmitted may be classified into N (N is a natural number, e.g., 3) OFDMA subchannels, and the N OFDMA subchannels or some channels may be used by STAs that shall transmit high-priority data. Some channels among the N OFDMA subchannels may be used by STAs that shall transmit normal-priority data. Some channels among the N OFDMA subchannels may be used by STAs that shall transmit low-priority data. That is, the priority may be determined according to the subchannel number. The mapping between the priority and the subchannel may be agreed upon or negotiated in advance. Alternatively, among all channels (e.g., 40MHz channel, 80MHz channel, 160MHz channel, 320MHz channel) through which the PR frame 520 may be transmitted, specific 20MHz channel(s) may be used according to priority. For example, in an 80MHz channel consisting of four 20MHz channels, the Primary 20MHz channel may always be used when transmitting the PR frame 520. The use of the Primary 20MHz channel may mean that low-priority traffic may be transmitted. If the Secondary 20MHz channel is used to transmit the PR frame 520, it may mean that a normal-priority frame is transmitted. If the Secondary 40MHz channel is used to transmit the PR frame 520, it may mean that a high-priority frame is transmitted. The mapping of the priority and the channel may be agreed upon or negotiated in advance. That is, depending on whether a specific subchannel or a specific channel (e.g., a specific 20MHz channel, 40MHz channel, 80MHz channel, or 160MHz channel) is used, the AP may know what priority the traffic transmission of the STAs has. The priority of the traffic may be determined based on the delay bound. That is, the priority of traffic whose delay bound arrives earlier may be determined to be higher. The delay bound may refer to a point in time at which a frame is discarded or invalidated in the transmission queue of the STA. The traffic or frame whose delay bound arrives earlier is more urgent. Alternatively, the priority of the traffic may be determined based on the QoS parameters (e.g., TID, AC). Alternatively, the priority of the traffic may be determined by considering both the delay bound and the QoS parameters.

The AP may allocate uplink resources based on the priority of the traffic to be transmitted by the STAs. For example, the priorities of the traffic may be classified into three types: 'high', 'normal', and 'low'. Alternatively, the priorities of the traffic may be configured more simply or more diversely. The AP may perform uplink traffic scheduling according to the priorities of the traffic. For example, the AP may allocate uplink resources to high-priority traffic first, or give more transmission resources to high-priority traffic. After receiving the PR frame 520, AP 1 101 may transmit a trigger frame 530 after a certain period of time (e.g., XIFS time for preemption, PIFS time, SIFS time). The trigger frame 530 may be a frame for UORA (uplink OFDMA random access) resource allocation.

AP 1 101 may transmit the trigger frame 530 to trigger high-priority traffic. The trigger frame 530 may include information (e.g., RA-RU (random access resource unit) information for UORA) for allocating resources to an STA (e.g., STA 2 105) that transmitted the S-CTS frame 520 on a high-priority channel, and the STA that transmitted the S-CTS frame 520 through the high-priority channel may transmit an uplink frame 540 on the uplink resources allocated by the AP to the trigger frame 530. The AP may transmit a response frame (e.g., a BA frame) to the STA.

After allocating high-priority uplink resources, AP 1 101 may transmit a trigger frame 531 to trigger normal-priority traffic. The trigger frame 531 may include information (e.g., RA-RU (random access resource unit) information for UORA) for allocating resources to STAs (e.g., STA 2 105, STA 3 107) that transmitted the S-CTS frame 520 on a normal-priority channel, and the STAs that transmitted the S-CTS frame 520 through the normal-priority channel may transmit an uplink frame 550 on the uplink resources allocated by the AP with the trigger frame 531. The AP may transmit a response frame (e.g., a BA frame) to the STA.

After allocating normal-priority uplink resources, AP 1 101 may transmit a trigger frame 533 to trigger low-priority traffic. The trigger frame may include information (e.g., RA-RU (random access resource unit) information for UORA) for allocating resources to an STA (e.g., STA 3 107) that transmitted an S-CTS frame 520 on a low-priority channel, and the STA that transmitted the S-CTS frame 520 on a high-priority channel may transmit an uplink frame 560 on the uplink resources allocated by the AP with the trigger frame 533. The AP may transmit a response frame (e.g., a BA frame) to the STA.

The traffic priority in the embodiment may be determined based on the delay bound within which the frame shall be transmitted. The earlier the delay bound arrives, the higher the traffic priority may be. Alternatively, the traffic priority may be determined based on QoS parameters. The traffic priority may be determined by considering both the delay bound and the QoS parameters. The delay bound may refer to a point in time at which a frame is discarded or invalidated in the transmission queue of the STA. The traffic or frame whose delay bound arrives earlier is more urgent.

According to one embodiment of the present disclosure, instead of the NFRP trigger frame and NDP Feedback, other types of trigger frames and response frames may be used. For example, when AP 1 uses a BSRP (buffer status report poll) trigger frame instead of the NFRP trigger frame, and STA 2 and STA 3 receive the BSRP trigger frame, STA 2 and STA 3 may transmit a BSR (buffer status report) frame. The BSR frame may indicate queue information of STA 2 and STA 3. The BSR frame may be a frame including BSR information in the form of A-Control in the MAC header of a QoS Null frame. AP 1 may receive BSR from STA 2 and STA 3 on a specific frequency (e.g., a mapped OFDMA subcarrier, subchannel, etc. according to the priority of traffic). AP 1 schedules the trigger frame according to the frequency on which the BSR frame is transmitted and the information included in the BSR frame.

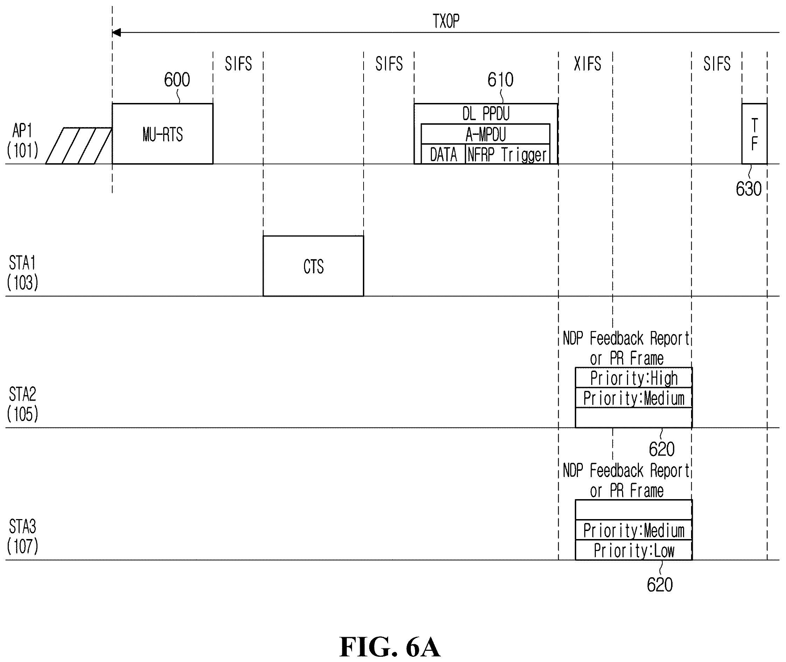

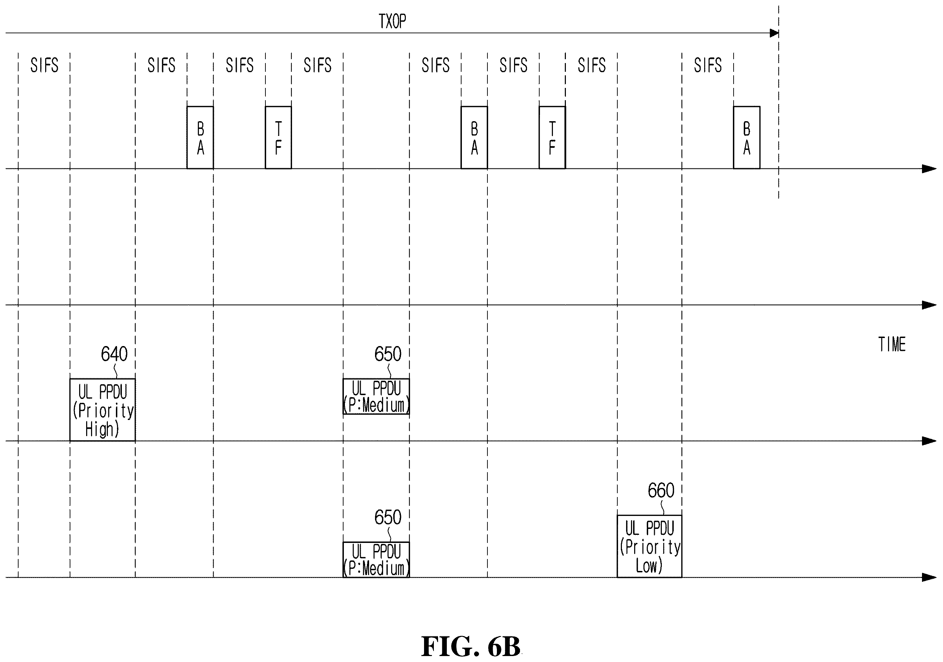

FIGS. 6a and 6b illustrate a fourth embodiment of a communication method using preemption in a wireless LAN system. FIG. 6a and FIG. 6b divisionally illustrate a third embodiment of a communication method using preemption in a wireless LAN system.

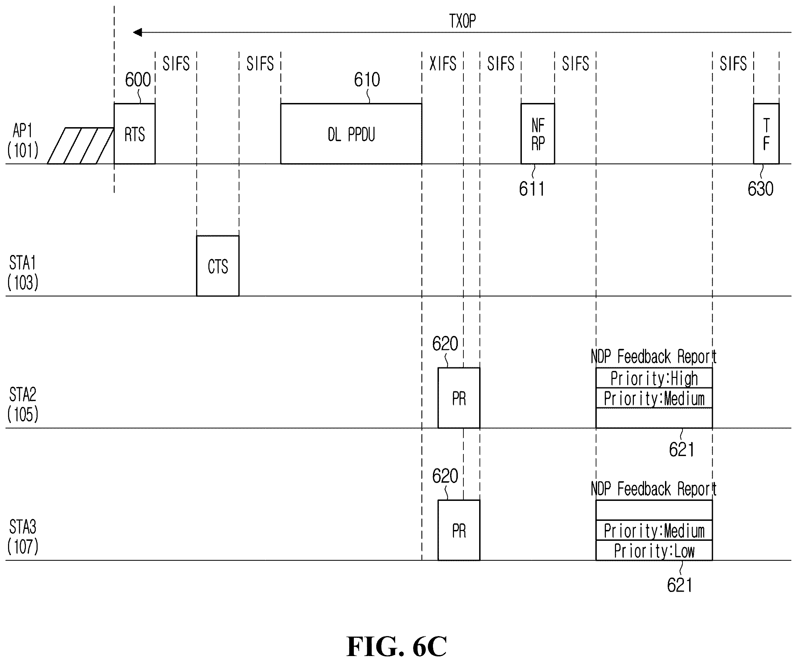

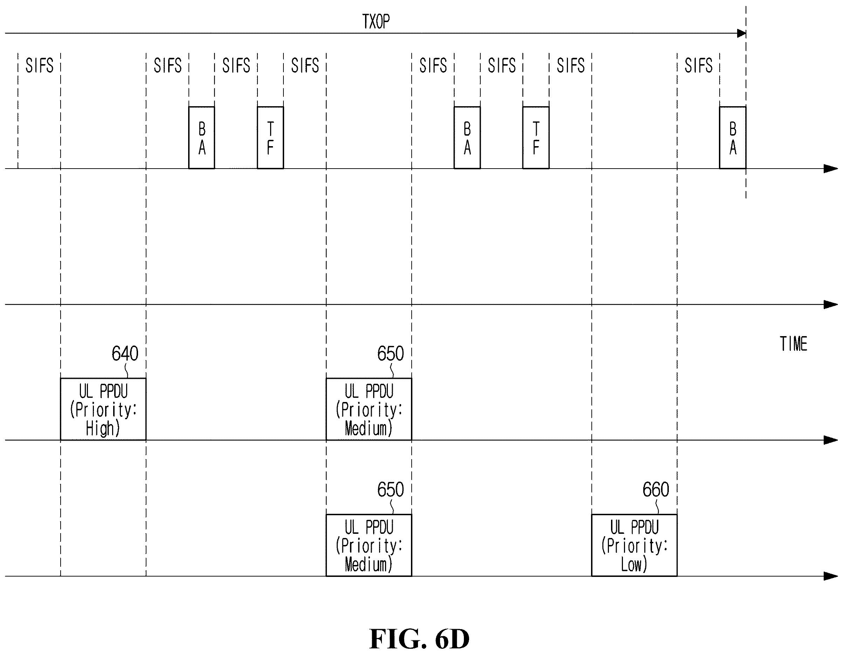

FIGS. 6c and 6d illustrate a fifth embodiment of a communication method using preemption in a wireless LAN system. FIG. 6c and FIG. 6d divisionally illustrate a third embodiment of a communication method using preemption in a wireless LAN system.

Referring to FIGS. 6a to 6d, AP 1 101 and STA 1 103, STA 2 105 and STA 3 107 connected to AP 1 101 may operate. AP 1 101 may perform an EDCA backoff operation to acquire a TXOP. Within the TXOP acquired by AP 1 101, AP 1 101 may transmit one or more frames (e.g., PPDU (Physical Layer Protocol Data Unit), MPDU (Medium Access Control Layer Protocol Data Unit), A-MPDU (Aggregated MPDU)). The PPDU transmitted by AP 1 101 may include one or more A-MPDUs or MPDUs. AP 1 101 may transmit an RTS frame 600 to STA 1 103 within the TXOP. AP 1 101 may transmit a DL PPDU 610 to STA 1 103 after a certain period of time (e.g., PIFS, SIFS time, or XIFS time for preemption operation) after receiving a CTS frame.

Referring to FIGS. 6a and 6b, a preemption indicator (e.g., a bit included in a PHY preamble, a bit included in a MAC header, a subfield, an information element, or an indication bit, etc.) is included in a DL PPDU 610 transmitted from AP 1 101 to STA 1 103. The preemption indicator may be included in various forms in the frame 610 transmitted from AP 1 101 to STA 1 103. The preemption indicator may indicate whether preemption is possible for a certain period of time (e.g., PIFS, SIFS time, or XIFS time for preemption operation) from the transmission end time of DL PPDU 610. AP 1 101 may include an NFRP (NDP (Null data PPDU) Feedback Report Poll) trigger frame in the form of an A-MPDU in the DL PPDU. Alternatively, the NFRP trigger frame may be transmitted separately after a certain period of time (e.g., SIFS time) from the transmission end time of the DL PPDU 610. The Feedback Type included in the User Info Field included in the NFRP trigger frame may be set to a separate type to indicate whether there is low latency traffic. An NFRP trigger frame with a separate Feedback type set to indicate whether there is low latency traffic may be a preemption indicator. When the preemption indicator in the DL PPDU indicates that preemption is possible and an NFRP trigger frame is included, or when the preemption indicator in the DL PPDU 610 indicates that preemption is possible and an NFRP trigger frame is transmitted separately, at the transmission end time of the PPDU including the preemption indicator or the transmission end time of the NFRP trigger frame, one or more STAs (e.g., STA 2 105 and STA 3 107) that want to perform a preemption operation may transmit a PR (Preemption Request) frame 620 to AP 1 101 during the XIFS time to notify that there is an LL packet to be transmitted. Here, a signal (e.g., NDP Feedback Report) may be transmitted instead of the PR frame 620. For example, one or more STAs may transmit the PR frame 620 to AP 1 101 after a SIFS time. The PR frame 620 may be started to be transmitted simultaneously by STA 2 105 and STA 3 107. For example, the NDP Feedback Report 610 may be a feedback signal transmitted by STAs for each tone present in the channel. A tone is an OFDMA subcarrier.

Referring to FIGS. 6c and 6d, a preemption indicator (e.g., a bit included in a PHY preamble, a bit included in a MAC header, a subfield, an information element, or an indication bit, etc.) is included in a DL PPDU 610 transmitted from AP 1 101 to STA 1 103. The preemption indicator may be included in various forms in a frame transmitted from AP 1 to STA 1 103. The preemption indicator may indicate whether preemption is possible for a certain period of time (e.g., PIFS, SIFS time, or XIFS time for preemption operation) from the transmission end time of DL PPDU 610. If the preemption indicator in the DL PPDU 610 indicates that preemption is possible, one or more STAs (e.g., STA 2 105 and STA 3 107) that want to perform a preemption operation at the end time point of the PPDU 610 including the preemption indicator may transmit at least one of a PR (Preemption Request) frame 620 or a signal (e.g., NDP Feedback Report) 621 to AP 1 101 during the XIFS period to notify that there is an LL packet to be transmitted. For example, one or more STAs may transmit the PR frame 620 to AP 1 101 after the SIFS period. The PR frame 620 may be started to be transmitted simultaneously by STA 2 105 and STA 3 107. When AP 1 101 receives the PR frame 620, it may know that STAs request a preemption operation. AP 1 101 may transmit an NFRP trigger frame 611 at an SIFS time after receiving the PR frame 620. The Feedback Type included in the User Info Field included in the NFRP trigger frame 611 may be set to a separate type for indicating whether there is low latency traffic. The NFRP trigger frame 611 in which a separate Feedback type for indicating whether there is low latency traffic is set may be a preemption indicator. STA 2 105 and STA 3 107 may transmit an NDP Feedback Report frame 621 in response to the NFRP trigger frame 611. The NDP Feedback Report 621 may be a feedback signal transmitted by STAs for each tone present in the channel. A tone is an OFDMA subcarrier.

Referring to FIGS. 6a to 6d, in the NDP Feedback Report 621, STA 2 105 and STA 3 107 may transmit a feedback signal on a specific tone according to the priority of traffic. For example, there may be 242 available tones. Of the 242 tones, 80 tones may be tones for transmitting feedback of low-priority traffic, 80 tones may be tones for transmitting feedback of normal-priority traffic, and 82 tones may be tones for transmitting feedback of high-priority traffic. Traffic priorities and tone mapping may be negotiated or agreed upon in advance. AP 1 101 may know what priority uplink traffic to be transmitted has based on the NDP Feedback Report 621 signals transmitted by STA 2 105 and STA 3 107.

The AP may allocate uplink resources to STAs after a certain period of time (e.g., SIFS time) after the NDP Feedback Report 621 of the STAs is transmitted. The AP may allocate uplink resources based on the priorities of the traffics that the STAs shall transmit. For example, the priorities of the traffics may be classified into three levels: 'high', 'normal', and 'low'. Alternatively, the priorities of the traffics may be simplified or configured in a more diverse manner. The AP may perform uplink traffic scheduling according to the priorities of the traffics. For example, the AP may allocate uplink resources to high-priority traffic first, or give more transmission resources to high-priority traffic. After receiving the PR frame 620 or a signal (e.g., NDP Feedback Report, 621), AP 1 101 may transmit a trigger frame 630 after a certain period of time (e.g., XIFS time for preemption, PIFS time, SIFS time). The trigger frame 630 may be a frame for UORA (uplink OFDMA random access) resource allocation.

AP 1 101 may transmit the trigger frame 630 to trigger high-priority traffic. The trigger frame 630 may include information (e.g., RA-RU (random access resource unit) information for UORA) for allocating resources to an STA (e.g., STA 2 105) that transmitted the NDP Feedback Report 621 on a high priority tone, and the STA that transmitted the NDP Feedback Report 621 on a high-priority channel may transmit an uplink frame 640 on the uplink resources allocated by the AP to the trigger frame 630. The AP may transmit a response frame (e.g., a BA frame) to the STA.

After AP 1 101 schedules high-priority traffic, AP 1 101 may transmit a trigger frame 631 to trigger normal-priority traffic. The trigger frame 631 may include information (e.g., RA-RU (random access resource unit) information for UORA) for allocating resources to STAs (e.g., STA 1 103, STA 2 105) that transmitted an NDP Feedback Report 621 on a normal-priority tone, and the STA that transmitted the NDP Feedback Report 621 on a normal-priority channel may transmit an uplink frame 650 on the uplink resource allocated by the AP to the trigger frame 631. The AP may transmit a response frame (e.g., a BA frame) to the STA.

After AP 1 101 schedules normal-priority traffic, AP 1 101 may transmit a trigger frame 633 to trigger low-priority traffic. The trigger frame 633 may include information (e.g., RA-RU (random access resource unit) information for UORA) for allocating resources to STAs (e.g., STA 1 103, STA 2 105) that transmitted an NDP Feedback Report 621 on a low-priority tone, and the STAs that transmitted the NDP Feedback Report 621 on a low-priority channel may transmit an uplink frame 660 on the uplink resources allocated by the AP to the trigger frame 633. The AP may transmit a response frame (e.g., a BA frame) to the STA.

The traffic priority in the embodiment may be determined based on the delay bound within which the frame shall be transmitted. The earlier the delay bound arrives, the higher the traffic priority. Alternatively, the traffic priority may be determined based on QoS parameters. The traffic priority may also be determined by considering both the delay bound and QoS parameters.

The delay bound may refer to a point in time at which a frame is discarded or invalidated in the transmission queue of the STA. The traffic or frame whose delay bound arrives earlier is more urgent.

According to one embodiment of the present disclosure, instead of the NFRP trigger frame and NDP Feedback, other types of trigger frames and response frames may be used. For example, when AP 1 uses a BSRP (buffer status report poll) trigger frame instead of the NFRP trigger frame, and STA 2 and STA 3 receive the BSRP trigger frame, STA 2 and STA 3 may transmit a BSR (buffer status report) frame. The BSR frame may indicate queue information of STA 2 and STA 3. The BSR frame may be a frame including BSR information in the form of A-Control in the MAC header of a QoS Null frame. AP 1 may receive BSR from STA 2 and STA 3 on a specific frequency (e.g., a mapped OFDMA subcarrier, subchannel, etc. according to the priority of traffic). AP 1 schedules the trigger frame according to the frequency on which the BSR frame is transmitted and the information included in the BSR frame.

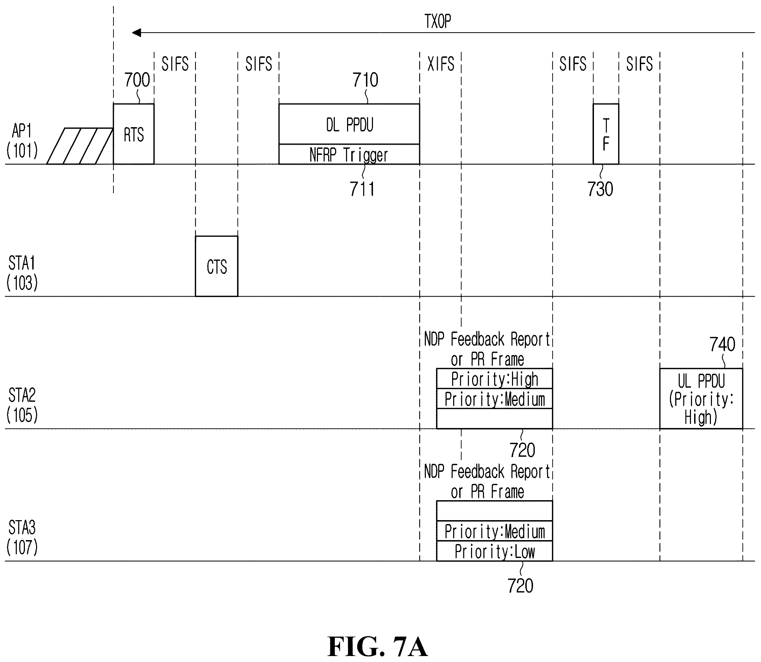

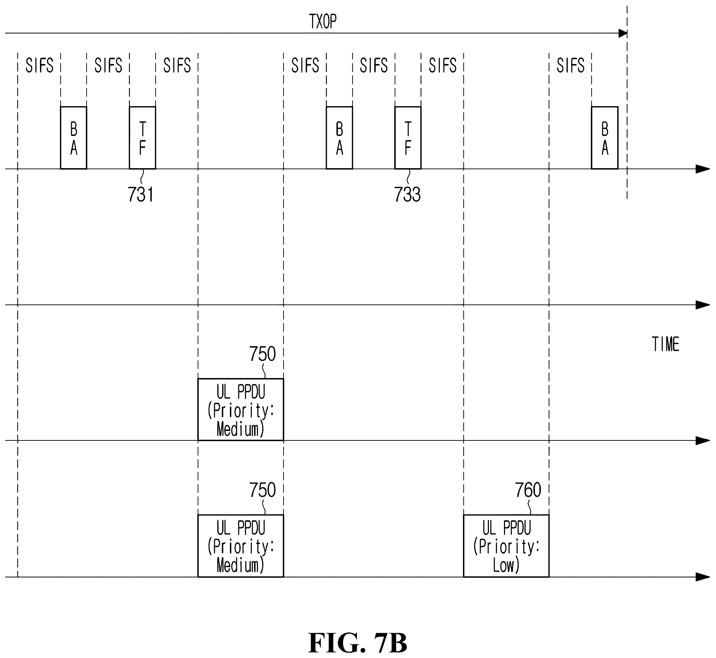

FIGS. 7a and 7b illustrate a sixth embodiment of a communication method using preemption in a wireless LAN system. FIG. 7a and FIG. 7b divisionally illustrate a third embodiment of a communication method using preemption in a wireless LAN system.

Referring to FIGS. 7a and 7b, AP 1 101 and STA 1 103, STA 2 105 and STA 3 107 connected to AP 1 101 may operate. AP 1 101 may perform an EDCA backoff operation to acquire a TXOP. Within the TXOP acquired by AP 1 101, AP 1 101 may transmit one or more frames (e.g., Physical Layer Protocol Data Unit (PPDU), Medium Access Control Layer Protocol Data Unit (MPDU), Aggregated MPDU (A-MPDU)). The PPDU transmitted by AP 1 101 may include one or more A-MPDUs or MPDUs. AP 1 101 may transmit an RTS frame 700 to STA 1 103 within the TXOP. AP 1 101 may transmit the DL PPDU 710 to STA 1 103 after a certain period of time (e.g., PIFS, SIFS time, or XIFS time for preemption operation) after receiving a CTS frame.

A preemption indicator (e.g., a bit included in a PHY preamble, a bit included in a MAC header, a subfield, an information element, or an indication bit, etc.) is included in a DL PPDU 710 transmitted from AP 1 101 to STA 1 103. The preemption indicator may be included in various forms in a frame transmitted from AP 1 101 to STA 1 103. The preemption indicator may indicate whether preemption is possible for a certain period of time (e.g., PIFS, SIFS time, or XIFS time for preemption operation) from the transmission end time of DL PPDU 710. The DL PPDU 710 of AP 1 101 may be a DL MU (Multi-User) PPDU. For example, some OFDMA resource units (e.g., OFDMA subchannels) of the DL PPDU 710 transmitted by AP 1 101 may be used when transmitting a data frame, and some OFDMA resource units may be used when transmitting an NFRP (NDP (Null data PPDU) Feedback Report Poll) trigger frame 711. A Feedback Type included in the User Info Field included in the NFRP trigger frame 711 may be set to a separate type for indicating whether there is low latency traffic. The NFRP trigger frame 711 in which a separate Feedback type for indicating whether there is low latency traffic is set may be a preemption indicator. If the preemption indicator in the DL PPDU 710 indicates that preemption is possible and an NFRP trigger frame 711 is included, at the transmission end time of the PPDU 710 including the preemption indicator, one or more STAs (e.g., STA 2 105 and STA 3 107) may transmit a PR (Preemption Request) frame or signal 720 to AP 1 101 during the XIFS time to notify that there is an LL packet to be transmitted. For example, the signal 720 may be an NDP Feedback Report. For example, one or more STAs may transmit the PR frame 720 to AP 1 101 after the SIFS time. The PR frame 720 may be started to be transmitted simultaneously by STA 2 105 and STA 3 107. For example, the NDP Feedback Report 720 may be a feedback signal transmitted by STAs for each tone present in the channel. A tone is an OFDMA subcarrier.

In the NDP Feedback Report 720, STA 2 105 and STA 3 107 may transmit feedback signals on specific tones according to the priority of the traffic. For example, there may be 242 available tones. Of the 242 tones, 80 tones may be tones for transmitting feedback of low-priority traffic, 80 tones may be tones for transmitting feedback of normal-priority traffic, and 82 tones may be tones for transmitting feedback of high-priority traffic. The traffic priorities and tone mapping may be negotiated or agreed upon in advance. AP 1 101 may know what priority uplink traffic to be transmitted has based on the NDP Feedback Report 720 signals transmitted by STA 2 105 and STA 3 107.

The AP may allocate uplink resources to STAs after a certain period of time (e.g., SIFS time) after the NDP Feedback Report 720 of the STAs is transmitted. The AP may allocate uplink resources based on the priorities of the traffics that the STAs shall transmit. For example, the priorities of the traffics may be classified into three levels: 'high', 'normal', and 'low'. Alternatively, the priorities of the traffics may be simplified or configured in a more diverse manner. The AP may perform uplink traffic scheduling according to the priorities of the traffics. For example, the AP may allocate uplink resources to high-priority traffic first, or give more transmission resources to high-priority traffic. AP 1 101 may transmit a trigger frame 730 after a certain period of time (e.g., XIFS time for preemption, PIFS time, SIFS time) after receiving the PR frame or signal 720. The trigger frame 730 may be a frame for UORA (uplink OFDMA random access) resource allocation.

AP 1 101 may transmit the trigger frame 730 to trigger high-priority traffic. The trigger frame may include information (e.g., RA-RU (random access resource unit) information for UORA) for allocating resources to an STA (e.g., STA 2 105) that transmitted an NDP Feedback Report 720 on a high-priority tone, and the STA that transmitted the NDP Feedback Report 720 on a high-priority channel may transmit an uplink frame 740 on the uplink resources allocated by the AP to the trigger frame 730. The AP may transmit a response frame (e.g., a BA frame) to the STA.

After AP 1 101 schedules high-priority traffic, AP 1 101 may transmit a trigger frame 731 to trigger normal-priority traffic. The trigger frame 731 may include information (e.g., RA-RU (random access resource unit) information for UORA) for allocating resources to STAs (e.g., STA 1 103, STA 2 105) that transmitted an NDP Feedback Report 720 on a normal-priority tone, and the STA that transmitted the NDP Feedback Report 720 on a normal-priority channel may transmit an uplink frame 750 on the uplink resource allocated by the AP to the trigger frame 731. The AP may transmit a response frame (e.g., a BA frame) to the STA.

After AP 1 101 schedules normal-priority traffic, AP 1 101 may transmit a trigger frame 733 to trigger low-priority traffic. The trigger frame 733 may include information (e.g., RA-RU (random access resource unit) information for UORA) for allocating resources to STAs (e.g., STA 1 103, STA 2 105) that transmitted an NDP Feedback Report 720 on a low-priority tone, and the STA that transmitted the NDP Feedback Report 720 on a low-priority channel may transmit an uplink frame 760 on the uplink resource allocated by the AP to the trigger frame 733. The AP may transmit a response frame (e.g., a BA frame) to the STA.

The traffic priority in the embodiment may be determined based on the delay bound within which the frame shall be transmitted. The earlier the delay bound arrives, the higher the traffic priority. Alternatively, the traffic priority may be determined based on QoS parameters. The traffic priority may also be determined by considering both the delay bound and QoS parameters.

The delay bound may refer to a point in time at which a frame is discarded or invalidated in the transmission queue of the STA. The traffic or frame whose delay bound arrives earlier is more urgent.

According to one embodiment of the present disclosure, instead of the NFRP trigger frame and NDP Feedback, other types of trigger frames and response frames may be used. For example, when AP 1 uses a BSRP (buffer status report poll) trigger frame instead of the NFRP trigger frame, and STA 2 and STA 3 receive the BSRP trigger frame, STA 2 and STA 3 may transmit a BSR (buffer status report) frame. The BSR frame may indicate queue information of STA 2 and STA 3. The BSR frame may be a frame including BSR information in the form of A-Control in the MAC header of a QoS Null frame. AP 1 may receive BSR from STA 2 and STA 3 on a specific frequency (e.g., a mapped OFDMA subcarrier, subchannel, etc. according to the priority of traffic). AP 1 schedules the trigger frame according to the frequency on which the BSR frame is transmitted and the information included in the BSR frame.

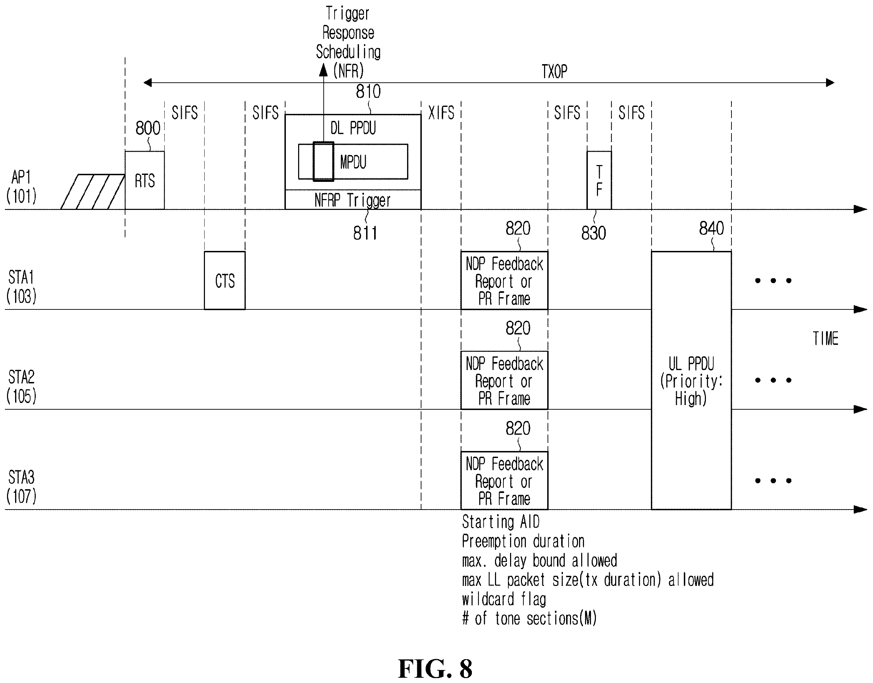

FIG. 8 illustrates a seventh embodiment of a communication method using preemption in a wireless LAN system.

Referring to FIG. 8, AP 1 101 and STA 1 103, STA 2 105 and STA 3 107 connected to AP 1 101 may operate. AP 1 101 may perform an EDCA backoff operation to acquire a TXOP. Within the TXOP acquired by AP 1 101, AP 1 101 may transmit one or more frames (e.g., PPDU (Physical Layer Protocol Data Unit), MPDU (Medium Access Control Layer Protocol Data Unit), A-MPDU (Aggregated MPDU)). The PPDU transmitted by AP 1 101 may include one or more A-MPDUs or MPDUs. AP 1 101 may transmit an RTS frame 800 to STA 1 103 within the TXOP. AP 1 101 may transmit a DL PPDU to STA 1 103 after a certain period of time (e.g., PIFS, SIFS time, or XIFS time for preemption operation) after receiving a CTS frame.

In this embodiment, it is assumed that a DL PPDU 810 of AP 1 101 follows a DL MU (Multi-User) PPDU format. For example, some OFDMA resource units (e.g., OFDMA subchannels) of the DL PPDU 810 transmitted by AP 1 101 may be used when transmitting a data frame, and some OFDMA resource units (RUs) may be used when transmitting an NFRP (NDP (Null data PPDU) Feedback Report Poll) trigger frame 811. In the existing wireless LAN technology, the NFRP trigger frame 811 is restricted from being included in the MU PPDU (Multiuser Physical layer Protocol Data Unit) format, but the EHT MU or later wireless LAN standards define that the MU PPDU may exceptionally include the NFRP trigger frame 811. In this case, the SIG-B field of the preamble of the MU PPDU 810 includes a broadcast AID. Broadcast AID indicates resource allocation information for an RU including an NFRP trigger frame 811. Using the resource allocation information for the RU, terminals wanting to participate in priority transmission may find the RU in which the NFRP trigger frame 811 is transmitted. Additionally, at least one terminal wanting to participate in priority transmission may parse information in the preamble and MPDU of the subsequent sequence. This is because even if the RA field of the first frame of any TXOP does not indicate a terminal wanting to participate in priority transmission, a frame inducing priority transmission may be included in the subsequent sequence.

The NFRP trigger frame 811 transmitted through a specific RU of the MU PPDU 810 includes an indicator for collecting information on LL packets of terminals that want to participate in priority transmission. The indicator for collecting information on LL packets may include starting AID information for indicating tone allocation information of NFR, time length information (preemption duration) of a subsequent priority transmission sequence, a maximum value of a delay bound that allows participation in NFR (max. delay bound allowed), information on the maximum size or transmission time of an LL packet that allows participation in NFR (max LL packet size (tx duration) allowed), a flag indicating the presence of a wildcard tone (Wildcard flag), and an indicator for notifying information on each tone group when grouping tones used for NFRP (e.g., number of tone groups).

The Feedback Type included in the User Info Field included in the NFRP trigger frame 811 may be set to a separate type for indicating whether there is low latency traffic. The NFRP trigger frame 811 in which a separate Feedback type for indicating whether there is low latency traffic is set may be a preemption indicator. When the preemption indicator in the DL PPDU 810 indicates that preemption is possible and the NFRP trigger frame 811 is included, at the transmission end time of the PPDU 810 including the preemption indicator, one or more STAs (e.g., STA 2 105 and STA 3 107) may transmit a PR frame or signal 820 to AP 1 101 during the XIFS time to notify that there is an LL packet to be transmitted. Here, the signal 820 may be an NDP Feedback Report. For example, one or more STAs may transmit a PR frame 820 to AP 1 101 after a SIFS time. The PR frame may be transmitted simultaneously by STA 2 105 and STA 3 107. For example, the NDP Feedback Report (NFR) 820 may be a feedback signal transmitted by STAs for each tone present in the channel. A tone is an OFDMA subcarrier.

According to the present embodiment, since STA 1 103 cannot receive an NFRP trigger frame 811 directed to a separate RU, in order to confirm the intent of STA 1 103 to participate in priority transmission, it is possible to transmit an NFRP trigger frame 811 to a specific MPDU of an A-MPDU transmitted to an RU that includes DL data for STA 1 103, or to configure separate header information for transmitting NFRP information and transmit it by including it in the header of DL data MPDUs in the form of a Trigger Response Scheduling control.

Among the terminals that have received the NFRP trigger frame 811, a terminal that wants to participate in priority transmission determines a tone based on the information indicated by the NFRP. The terminal that wants to participate in priority transmission transmits an NDP Feedback Report 820 using the corresponding tone. AP 1 101 may transmit a trigger frame 830 to induce uplink priority transmission by utilizing the collected NRF information. The terminal that has been instructed to transmit uplink TB PPDU through the User Info field of the trigger frame 830 transmits an LL packet to AP 1 101. In this case, the terminal shall include the LL packet specified in the NFR 820 in the TB PPDU and transmit it as a top priority, and if there is room in the allocated RU after transmitting all LL packets specified in the NFR 820, the terminal may transmit additional packets in the form of A-MPDU according to the priority of AC.

Since the terminals that participated in the priority transmission did not obtain the TXOP through EDCA competition, this may cause an imbalance in terms of fairness compared to the terminals that did not participate in the priority transmission. Therefore, it may be necessary to place some restrictions on future priority transmission or EDCA competition for the terminals that successfully transmitted the LL packet through the priority transmission. For example, the terminal that received an instruction to transmit an LL packet in the trigger frame after the NFRP sequence, transmitted data in the TB PPDU, and received an ACK from AP 1 101 may apply a MU EDCA parameter set that adjusts the channel connection strength (typically lowers the connection strength) to the ACs that received the ACK from AP 1 101. Alternatively, based on a value agreed upon between AP 1 101 and the terminals (according to the association procedure or a separate setup procedure), the terminals may be prevented from responding to the NFRP for a specified number of times or for a specified period of time. While fairness may be adjusted through priority transmission participation restrictions, exception conditions may be added to minimize situations where timeouts occur due to terminals with restricted participation exceeding the delay bound. For example, if the smallest delay bound value in each AC's queue is below a preset threshold, participation in NFRP may be allowed regardless of priority transmission participation restrictions. In addition, since the application of the MU EDCA parameter set to the AC may set an excessively large backoff counter, making transmission attempts impossible within the delay bound, the application of the MU EDCA parameter set may be disabled only when the smallest delay bound value is below a preset threshold and EDCA competition may be attempted with the general EDCA parameter set. Specifically, the MU EDCA timer may be regarded as 0 in this situation, and the backoff counter of the AC may be reset based on the general EDCA parameter set. At this time, the existing MU EDCA timer may be stopped or allowed to continue to decrease. A terminal that successfully transmitted an LL packet after acquiring a TXOP using a general EDCA parameter set may need to reapply the MU EDCA parameter set and perform a backoff operation based on the MU EDCA parameter set, if the existing MU EDCA timer remains.

According to the embodiment of FIG. 8, the NFRP trigger frame or related control header information may include one or more of starting AID information for indicating tone allocation information of NFR, time length information of a subsequent priority transmission sequence (preemption duration), a maximum delay bound allowing participation in NFR (max. delay bound allowed), information on the maximum size or transmission time of an LL packet allowing participation in NFR (max LL packet size (tx duration) allowed), a flag indicating the presence of a wildcard tone (Wildcard flag), and an indicator indicating information on each tone group when grouping tones used in NFRP (e.g., number of tone groups).

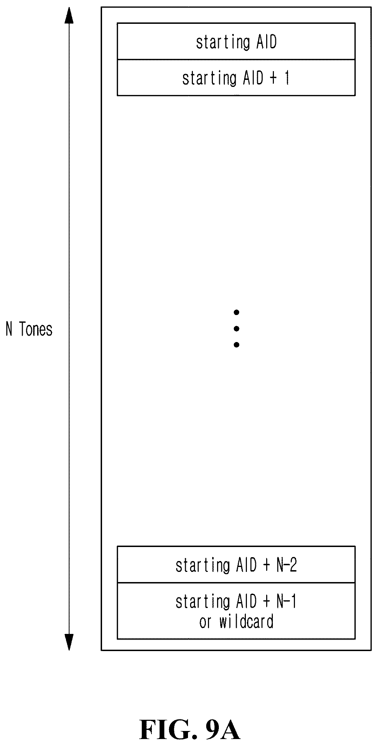

FIG. 9a illustrates a first embodiment of a tone mapping structure and allocation method for an NFRP (NDP feedback report poll) in a wireless LAN system. FIG. 9a illustrates an embodiment of inducing NFR transmission by utilizing starting AID information.

Referring to FIG. 9a, if there are a total of N tones in the frequency resources used for the NFRP sequence, the first tone is assigned to a terminal with an AID equal to the starting AID value, and the next tone is assigned to a terminal corresponding to starting AID +1, thereby inducing NFR transmission by specifying the terminal to be assigned to each tone. Accordingly, among the terminals that have received the NFRP trigger frame in the above manner, a terminal that has a tone corresponding to its own AID and wants to participate in LL packet priority transmission may transmit an NFR on the corresponding tone. If the NFRP trigger frame or control header information contains additional conditions for participation in priority transmission (e.g., delay bound or LL packet size (transmission time)), only terminals that satisfy the conditions may participate in NFR transmission. If the wildcard flag bit is activated, one or more terminals that do not satisfy the NFR transmission conditions but want to participate in LL packet priority transmission may transmit an NFR on a separate tone assigned to wildcard NFR transmission. In this case, it is not known which terminal participated in the wildcard tone, but the AP may consider performing an additional LL packet priority transmission sequence after performing the corresponding LL packet priority transmission sequence.

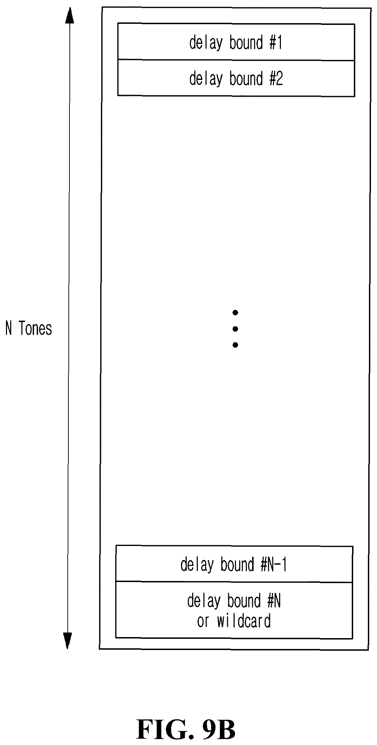

FIG. 9b illustrates a second embodiment of a tone mapping structure and allocation method for an NFRP in a wireless LAN system. FIG. 9b illustrates an embodiment of inducing NFR transmission by utilizing max. delay bound allowed information.

Referring to FIG. 9b, if there are a total of N tones in the frequency resources used for the NFRP sequence, the value indicated in the max. delay bound allowed information may be divided by N to set N delay bound intervals. Therefore, the terminal may transmit an NFR on the tone corresponding to the interval to which the delay bound value of the LL packet to be transmitted thereby belongs (excluding the wildcard tone if the wildcard flag is enabled). In this case, since the AP cannot distinguish which terminal transmitted the NFR, if it wants to grant an LL packet transmission opportunity to the terminal that transmitted the NFR on a specific tone, the tone index information may be used instead of the terminal's AID in the User Info field of the trigger frame to instruct the terminal that transmitted the NFR on the indicated tone index to transmit the LL packet. When utilizing this embodiment, there is an advantage in that the AP may induce priority transmission of urgent LL packets. The wildcard flag may be applied equally to this embodiment, and if there are additional conditions such as the max LL packet size (tx duration), it is also possible to allow only terminals that may satisfy the conditions to transmit NFRs.

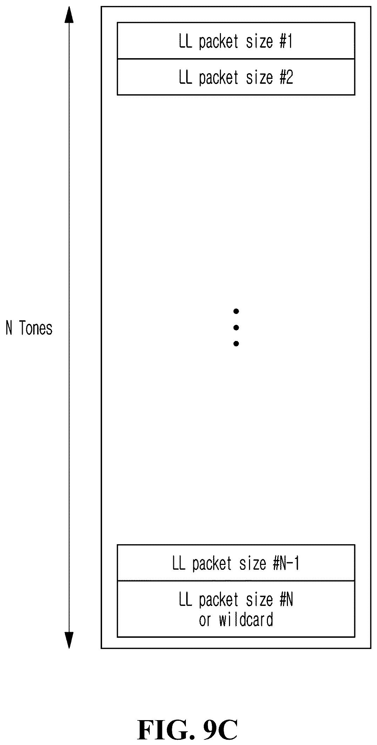

FIG. 9c illustrates a third embodiment of a tone mapping structure and allocation method for an NFRP in a wireless LAN system. FIG. 9c illustrates an embodiment of inducing NFR transmission by utilizing max LL packet size (tx duration) allowed information.

Referring to FIG. 9c, if there are a total of N tones in the frequency resources used for the NFRP sequence, the value indicated in the max LL packet size (tx duration) information may be divided by N to set N delay bound intervals. Therefore, the terminal may transmit an NFR on the tone corresponding to the interval to which the size or transmission time value of the LL packet to be transmitted thereby belongs (excluding the wildcard tone if the wildcard flag is enabled). In this case, since the AP cannot distinguish which terminal transmitted the NFR, if it wants to grant an LL packet transmission opportunity to the terminal that transmitted the NFR on a specific tone, the tone index information may be used instead of the terminal's AID in the User Info field of the trigger frame to instruct the terminal that transmitted the NFR on the indicated tone index to transmit the LL packet. When utilizing this embodiment, there is an advantage in that the AP may maximize resource allocation efficiency when scheduling for LL packet priority transmission. The wildcard flag may be applied to this embodiment, and if there are additional conditions such as max delay bound, it is also possible to allow only terminals that may satisfy the conditions to transmit NFRs.

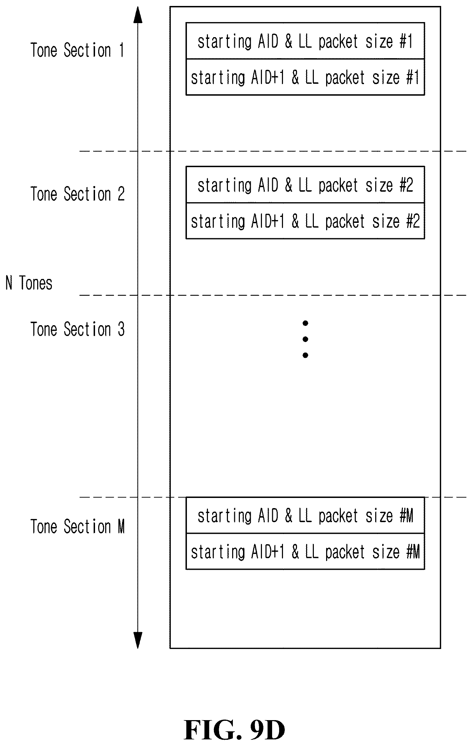

FIG. 9d illustrates a fourth embodiment of a tone mapping structure and allocation method for an NFRP in a wireless LAN system. FIG. 9d is an embodiment of inducing NFR transmission by utilizing number-of-tone-sections information.

Referring to FIG. 9d, when there are a total of N tones in the frequency resources used for the NFRP sequence, M tone sections may be set by dividing the N tones by the value (M) indicated in the Number of tone sections information. According to this embodiment, each tone section may allocate tones by combining two or more pieces of information among starting AID, max. delay bound allowed, and max LL packet size (tx duration) allowed. For example, each first tone section may divide the max LL packet size into M sections so that terminals that want to transmit LL packets corresponding to the first LL packet size section may transmit NFR on the corresponding tone according to the starting AID condition. According to this embodiment, there is an advantage in that the conditions of LL packets that are intended to induce NFR transmission may be specified, and at the same time, which terminal has transmitted the NFR may be identified.

Hereinafter, a preemption operation of an AP and an STA according to an embodiment of the present disclosure will be described. The AP is connected or associated with at least one STA. For example, the AP may be connected or associated with a first STA, a second STA, and a third STA. The AP and at least one STA may perform transmission or reception using at least one of a channel, a subchannel, or a subcarrier. In other words, the AP and at least one STA may transmit or receive a frame using at least one of a subchannel or a subcarrier. For example, the AP and at least one STA may transmit or receive a frame on each of a plurality of subchannels. As another example, the AP and at least one STA may transmit or receive a frame using a plurality of subchannels. Here, the subchannel or subcarrier may be at least a portion of a band of a channel connecting an STA and an AP. At least one subchannel or subcarrier may be referred to as a resource unit (RU) or a tone. The STA and the AP may perform a preemption operation. Here, preemption operation refers to an operation or procedure for transmitting LL packets or LL traffic by an STA or AP that has not acquired a TXOP. In other words, it refers to the priority transmission mentioned above.

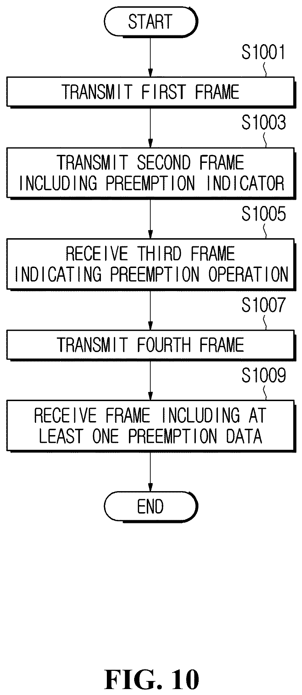

FIG. 10 illustrates a flowchart of a procedure for an access point (AP) to perform a preemption operation according to one embodiment of the present disclosure. The procedure of FIG. 10 is performed by an AP receiving preemption data. Preemption data refers to data transmitted by a preemption operation. Preemption data may include, for example, LL packets or LL traffic.

Referring to FIG. 10, in step S1001, the AP transmits an initial frame (e.g., the initial frame 300 of FIG. 3). The initial frame may be referred to as a first frame. The initial frame refers to a frame that is transmitted for the first time after obtaining a TXOP. For example, the initial frame includes an MU-RTS frame and an RTS frame. The initial frame is transmitted to at least one of the STAs connected to the AP. The AP may perform a channel access operation before transmitting the initial frame. The channel access operation may include, for example, an EDCA backoff operation. The channel access operation is a procedure for performing a frame. For example, the AP may obtain a TXOP by performing the channel access operation. The AID of the User Info field of the initial frame may indicate at least one of the STAs.

In step S1003, the AP transmits a frame including a preemption indicator (e.g., DL PPDU 310 in FIG. 3). The frame including the preemption indicator may include a PPDU, an A-MPDU, and an MDPU. The frame including the preemption indicator may be a frame including multiple frames. For example, the frame including the preemption indicator may include an NFRP (NDP (Null data PPDU) Feedback Report Poll) trigger frame (e.g., the NFRP trigger frame 711 in FIG. 7a) and an MU-RTS frame. The frame including the preemption indicator may be transmitted using at least one subchannel or subcarrier. The preemption indicator indicates whether a preemption operation is possible for a predefined time from the transmission end time of the frame including the preemption indicator. The preemption indicator is included in the frame in various forms. For example, the preemption indicator may take the form of a bit included in a PHY preamble, a bit included in a MAC header, a subfield, an information element, or an indication bit. Alternatively, if the feedback type of the NFRP trigger frame is a type for indicating the presence of preemption data, the NFRP trigger frame may be used as a preemption indicator. That is, an NFRP trigger frame having a feedback type for preemption operation may be regarded as a preemption indicator. The broadcast AID of the frame including the preemption indicator may include resource allocation information for a subchannel or subcarrier on which the NFRP trigger frame is transmitted.

In step S1005, the AP receives a frame indicating a preemption operation. Here, the frame indicating the preemption operation may be referred to as a second frame. The frame indicating the preemption operation may be a signal or frame indicating that there is preemption data to be transmitted. For example, the frame indicating the preemption operation may include at least one of a PR frame (e.g., an S-CTS frame 320 of FIG. 5) or a signal indicating that there is preemption data (e.g., an NDP feedback report 621 of FIG. 6c). The frame indicating the preemption operation may be received within a predefined time from the transmission end time of the frame including the preemption indicator, and may be received based on a parameter of an initial frame. At least one parameter of the frame indicating the preemption operation may be identical to the parameter of the initial frame. For example, the SCRAMBELR_INITIAL_VALUE of the TXVECTOR parameter of the PR frame may be identical to the SCRAMBELR_INITIAL_VALUE of the RXVECTOR parameter of the initial frame. The frame indicating the preemption operation may be used to indicate a priority of preemption data. The priority may be indicated based on the channel used to transmit the frame indicating the preemption operation. For example, a priority may be predefined for each channel, and the priority of the preemption data may be indicated based on the priority of the channel on which the frame indicating the preemption operation is received. As another example, the priority may be indicated based on the bandwidth of the channel used to transmit the frame indicating the preemption operation. For example, preemption data according to a frame indicating a preemption operation transmitted using a 40 MHz channel may have a higher priority than preemption data according to a frame indicating a preemption operation transmitted using a 20 MHz channel. The priority of the preemption data may be determined based on at least one of a delay bound or a QoS parameter.

In step S1007, the AP transmits a trigger frame (e.g., the trigger frame (330) of FIG. 3). The AP allocates resources and instructs the STA about the allocated resources using the trigger frame. The trigger frame is a frame for uplink frame transmission. For example, the trigger frame may be a frame for allocating resources to an STA that has transmitted a PR frame. Here, the resources may be resources for UORA. The AP may instruct the STA about the allocated resources based on information included in the common info field and the user info field included in the trigger frame. The AP may allocate resources based on the priority of preemption data. The preemption data includes preemption data. For example, the AP may allocate resources so that high-priority preemption data is transmitted before low-priority preemption data. As another example, the AP may allocate more transmission resources to high-priority preemption data than to low-priority preemption data. Here, the allocated resources may include OFDMA subchannels or subcarriers. In other words, the AP may allocate at least one OFDMA subchannel or subcarrier for transmitting preemption data based on the priority of the preemption data.

In step S1009, the AP receives a frame including at least one preemption data (e.g., the uplink frame 340 of FIG. 3). Here, the frame including the preemption data may be received using the resources indicated by the trigger frame. The AP may receive a frame including the preemption data from at least one STA. The frames including the preemption data of each STA may be transmitted using different OFDMA subchannels or subcarriers. The frames including the preemption data using different OFDMA subchannels or subcarriers may be received simultaneously. Alternatively, the frames including the preemption data using different OFDMA subchannels or subcarriers may be received at different times. If preemption data to be transmitted by the STA remains, steps S1007 to S1009 may be repeated. Here, steps S1007 to S1009 may be performed according to priority. For example, steps S1007 to S1009 for a frame including high-priority preemption data may be performed first, and steps S1007 to S1009 for a frame including low-priority preemption data may be performed after the high-priority preemption data is transmitted.

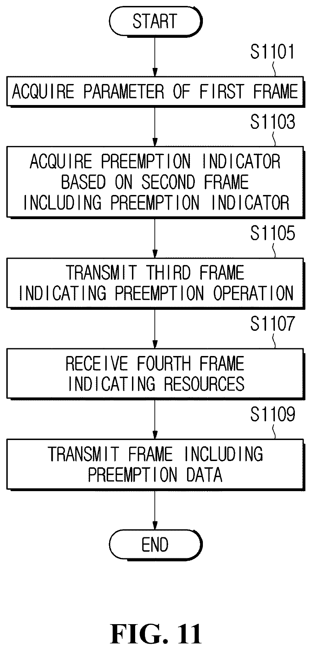

FIG. 11 illustrates a flowchart of a procedure for a station (STA) to perform a preemption operation according to one embodiment of the present disclosure. The procedure of FIG. 11 is performed by an STA participating in a preemption operation. For example, the STA may be an STA that holds preemption data. The preemption data may include, for example, low latency packet (LL packet) and low latency traffic (LL traffic).

Referring to FIG. 11, in step S1101, the STA acquires at least some of the parameters of the initial frame based on the initial frame (e.g., the initial frame 300 of FIG. 3). The initial frame may be referred to as the first frame. The initial frame includes MU-RTS and RTS. The AID of the User Info field of the initial frame may indicate an STA that does not have preemption data. The parameters of the initial frame may include an RXVECTOR parameter, and the RXVECTOR parameter may include SCRAMBELR_INITIAL_VALUE.

In step S1103, the STA acquires a preemption indicator based on a frame including a preemption indicator transmitted by the AP. For example, the STA may acquire the preemption indicator from at least a portion of the frame including the preemption indicator. For example, the STA may acquire the preemption indicator from the MAC header of the frame including the preemption indicator. As another example, the STA may acquire the preemption indicator from an NFRP trigger frame. For example, an NFRP trigger frame whose feedback type is a type for indicating the presence of preemption data may be regarded as a preemption indicator. That is, an NFRP trigger frame having a feedback type for preemption operation may be regarded as a preemption indicator. The broadcast AID of the frame including the preemption indicator may include resource allocation information for a subchannel or subcarrier on which the NFRP trigger frame is transmitted. The STA that has acquired the preemption indicator performs channel sensing to transmit preemption data. That is, an STA that has acquired a preemption indicator may perform channel sensing to perform a preemption operation.

In step S1105, the STA transmits a frame indicating a preemption operation. Here, the frame indicating the preemption operation may be referred to as a second frame. The frame indicating the preemption operation may be a signal or frame indicating the preemption operation may be a PR frame (e.g., the S-CTS frame 320 of FIG. 3) or a signal indicating that there is preemption data to be transmitted (e.g., the NDP feedback report 621 of FIG. 6c). The frame indicating the preemption operation may include a TXVECTOR parameter, and the TXVECTOR parameter includes SCRAMBELR_INITIAL_VALUE. The SCRAMBELR_INITIAL_VALUE of the frame indicating the preemption operation has the same value as the SCRAMBELR_INITIAL_VALUE of the initial frame. The STA transmits the frame indicating the preemption operation using a subchannel or a subcarrier. To perform a preemption operation, the STA shall inform the AP of the priority of the preemption data using the frame indicating the preemption operation. To this end, the STA transmits the frame indicating the preemption operation using at least one of the subchannels or at least some of the subcarriers. Here, the priority of the subchannel or subcarrier on which the frame indicating the preemption operation is transmitted indicates the priority of the preemption data. The priority according to the subchannel or subcarrier may be determined according to the bandwidth of the subchannel or subcarrier or the priority previously mapped to the subchannel or subcarrier. The priority of the preemption data may be determined by at least one of a delay bound or a QoS parameter.

In step S1107, the STA receives a trigger frame (e.g., the trigger frame 330 of FIG. 3). The trigger frame is a frame that indicates resources for the STA to transmit a frame. Here, the resources may be resources for UORA. The STA may recognize allocated resources based on information included in the common info field and the user info field included in the trigger frame. The resources may be allocated based on the priority of the preemption data. For example, resources may be allocated to preempt high-priority preemption data. As another example, more resources may be allocated for high-priority preemption data. Here, the allocated resources may include OFDMA subchannels or subcarriers. In other words, the allocated resources may include at least a portion of the channels which may be used by the STA.

In step S1109, the STA transmits a frame including preemption data (e.g., the uplink frame 340 of FIG. 3). The frame including preemption data may be transmitted using resources indicated by the trigger frame. For example, if the trigger frame indicates some of the subcarriers of the channel, the STA may transmit the frame including preemption data using the indicated subcarriers. To transmit multiple pieces of preemption data with different priorities, steps S1105 to S1107 may be repeated. For example, the STA may transmit preemption data with a priority of 'high' and then repeat steps S1107 to S1109 to transmit preemption data with a priority of 'normal'.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

In addition, the computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

While the present disclosure has been described above with reference to preferred embodiments of the present disclosure, those skilled in the art will understand that various modifications and variations may be made to the present disclosure without departing from the scope and spirit of the present disclosure, which are defined by the Claims appended hereto.

## Claims

1. A method of operating a STA (station) in a wireless LAN system, the method comprising:
acquiring at least some of parameters of a first frame based on the first frame;
acquiring a preemption indicator from a second frame including the preemption indicator;
transmitting a third frame indicating a preemption operation based on the preemption indicator;
receiving a fourth frame indicating resources allocated for the preemption operation; and
transmitting preemption data based on the resources,
wherein the parameters of the first frame and parameters of the third frame have the same value.

2. The method of claim 1,
wherein the third frame is transmitted using at least one subchannel or subcarrier, and
wherein the at least one subchannel or subcarrier is determined according to priority of the preemption data.

3. The method of claim 2,
wherein at least one of a bandwidth or number of the at least one subchannel or subcarrier is determined according to the priority of the preemption data.

4. The method of claim 1,
wherein the third frame includes at least one of a PR frame, an S-CTS frame, or an NDP feedback report.

5. The method of claim 1, wherein the resources include at least one subchannel or subcarrier and are allocated based on priority of the preemption data.

6. The method of claim 1,
wherein a frame including the preemption indicator includes an NFRP (NDP feedback report poll) trigger frame.

7. The method of claim 6, wherein the NFRP trigger frame is received using resources indicated by a broadcast AID of the frame including the preemption indicator.

8. The method of claim 6,
wherein the preemption indicator includes the NFRP trigger frame, and
wherein a feedback type of the NFRP trigger frame is a type for a preemption operation.

9. The method of claim 1, wherein the third frame is a frame transmitted to an STA that does not have the preemption data.

10. A method of operating an access point (AP) in a wireless LAN system, the method comprising:
transmitting a first frame;
transmitting a second frame including a preemption indicator;
receiving a third frame indicating a preemption operation based on the preemption indicator;
transmitting a fourth frame indicating resources allocated for the preemption operation; and
receiving preemption data based on the resources,
wherein the first frame and the third frame include parameters having the same value.

11. The method of claim 10,
wherein the second frame is received using at least one subchannel or subcarrier, and
wherein the at least one subchannel or subcarrier is determined according to priority of the preemption data.

12. The method of claim 11,
wherein at least one of a bandwidth or number of the at least one subchannel or subcarrier is determined according to the priority of the preemption data.

13. The method of claim 10,
wherein the second frame includes at least one of a PR frame, an S-CTS frame, or an NDP feedback report.

14. The method of claim 10, wherein the resources include at least one subchannel or subcarrier and are allocated based on priority of the preemption data.

15. The method of claim 10,
wherein the second frame includes an NFRP (NDP feedback report poll) trigger frame.

16. The method of claim 15, wherein the NFRP trigger frame is received using resources indicated by a broadcast AID of the frame including the preemption indicator.

17. The method of claim 16,
wherein the preemption indicator includes the NFRP trigger frame, and
wherein a feedback type of the NFRP trigger frame is a type for a preemption operation.

18. A station (STA) in a wireless LAN system, the STA comprising:
a transceiver; and
a processor connected to the transceiver,
wherein the processor is configured to:
acquire at least some of parameters of a first frame based on the first frame;
acquire a preemption indicator from a second frame including the preemption indicator;
transmit a third frame indicating a preemption operation based on the preemption indicator;
receive a fourth frame indicating resources allocated for the preemption operation; and
transmit preemption data based on the resources,
wherein the parameters of the first frame and parameters of the third frame have the same value.

19. An access point (AP) in a wireless LAN system, the AP comprising:
a transceiver; and
a processor connected to the transceiver,
wherein the processor is configured to:
transmit a first frame;
transmit a second frame including a preemption indicator;
receive a third frame indicating a preemption operation based on the preemption indicator;
transmit a fourth frame indicating resources allocated for the preemption operation; and
receive preemption data based on the resources,
wherein the first frame and the third frame include parameters having the same value.
